# FASCICULE DE BREVET EUROPEEN

(11) **EP 3 290 285 B1**
(45) Date de publication et mention de la délivrance du brevet: **24.07.2019**
(21) Numéro de dépôt: 17186593.4
(22) Date de dépôt: 17.08.2017
(51) Int. Cl.: B61D 17/00, B61D 27/00, F25B 41/00

(54) **VOITURE DE VÉHICULE DE TRANSPORT, NOTAMMENT DE VÉHICULE FERROVIAIRE, COMPORTANT UN DISPOSITIF DE CLIMATISATION PERFECTIONNÉ**
WAGEN EINES TRANSPORTFAHRZEUGS, INSBESONDERE EINES SCHIENENFAHRZEUGS, DAS EINE PERFEKTIONIERTE KLIMAANLAGENVORRICHTUNG UMFASST
TRANSPORT VEHICLE CAR, IN PARTICULAR FOR RAILWAY VEHICLE, HAVING AN IMPROVED AIR CONDITIONING DEVICE

(30) Priorité: 01.09.2016 FR 1658132
(43) Date de publication de la demande: 07.03.2018
(73) Titulaire: ALSTOM Transport Technologies, 93400 Saint-Ouen (FR)
(72) Inventeur: ABOU-EID, Rami, 75014 PARIS (FR); CHEVALIER, Philippe, 92500 Rueil Malmaison (FR); GARNICHE, François, 59159 MARCOING (FR); HEUZE, Alexandre, 93400 SAINT OUEN (FR)
(74) Mandataire: Lavoix

(56) Documents cités:
- EP-A1- 2 894 419
- EP-A1- 2 933 586
- EP-A1- 2 957 476
- US-A1- 2009 205 346

## Description

La présente invention concerne une voiture de véhicule de transport, notamment de véhicule ferroviaire, comportant un dispositif de climatisation perfectionné. Par exemple, ledit véhicule de transport est un métro.

On connait déjà, dans l'état de la technique, une voiture de véhicule de transport, notamment de véhicule ferroviaire, comportant un compartiment et un dispositif de climatisation du compartiment, le dispositif de climatisation comprenant un premier circuit de pompe à chaleur, dans lequel circule un fluide frigorigène, le premier circuit comprenant au moins un premier échangeur de chaleur avec de l'air extérieur, un compresseur et un dispositif détendeur.

Le dispositif de climatisation comporte généralement au moins un second échangeur de chaleur agencé dans une zone supérieure du compartiment, notamment sur un plafond du compartiment.

On connait par ailleurs, d'après US 2009/205346, une voiture de véhicule de transport similaire à celle du préambule de la revendication 1.

L'invention a notamment pour but d'améliorer un tel dispositif de climatisation, notamment en réduisant son encombrement et en améliorant ses performances pour un confort optimal des passagers présents dans le compartiment.

A cet effet, l'invention a notamment pour objet une voiture de véhicule de transport selon la revendication 1.

On notera que ce dispositif de climatisation selon l'invention comporte le second circuit, intermédiaire entre le premier circuit d'un côté, et les seconds échangeurs de chaleur de l'autre. Un tel système indirect est moins encombrant qu'un système direct, car il ne nécessite que des conduits de circulation de fluide caloporteur ou de fluide frigorigène, et pas de conduites de circulation d'air.

Le dispositif de climatisation selon l'invention comporte des seconds échangeurs de chaleur avantageusement en zone supérieure du compartiment, et des troisièmes échangeurs de chaleur en zone inférieure du compartiment. L'utilisation de seconds et troisièmes échangeurs de chaleurs séparés permet d'améliorer le confort thermique des passagers.

Par exemple, lorsque le dispositif de climatisation est employé pour le refroidissement du compartiment, seuls les seconds échangeurs thermiques sont utilisés, et lorsque le dispositif de climatisation est employé pour le chauffage du compartiment, seuls les troisièmes échangeurs thermiques sont utilisés. Cette configuration utilise de manière optimale le principe selon lequel la chaleur a tendance à monter.

Une voiture selon l'invention peut comporter en outre l'une ou plusieurs des caractéristiques suivantes, prises seules ou second toutes combinaisons techniquement envisageables :
- le premier circuit et l'échangeur de chaleur commun sont agencés sous un plancher du compartiment ;
- chaque second échangeur de chaleur est agencé dans une zone supérieure du compartiment, notamment sur un plafond du compartiment ;
- le dispositif de climatisation comporte un réservoir de stockage thermique, connectable au premier circuit en parallèle de l'échangeur de chaleur commun, et/ou connectable au second circuit en parallèle de l'échangeur de chaleur commun ;
- le réservoir de stockage thermique est agencé sous un plancher du compartiment ;
- le premier circuit comporte une première branche, connectée à chaque premier échangeur de chaleur, une deuxième branche, s'étendant entre chaque premier échangeur de chaleur et le dispositif détendeur, une troisième branche, s'étendant entre le dispositif détendeur et l'échangeur de chaleur commun, une quatrième branche, connectée à l'échangeur de chaleur commun, une branche de compresseur, sur laquelle est agencée le compresseur, et s'étendant entre une partie d'entrée et une partie de sortie, et un dispositif d'inversion, propre à connecter alternativement ladite partie d'entrée à la première branche et ladite partie de sortie à la quatrième branche, ou ladite partie d'entrée à la quatrième branche et ladite partie de sortie à la première branche ;
- le second circuit comporte au moins une vanne de sélection du passage du fluide caloporteur vers chaque second échangeur ou vers chaque troisième échangeur, permettant la connexion sélective de l'échangeur de chaleur commun, avec chaque second échangeur ou avec chaque troisième échangeur ;
- le premier circuit pouvant prendre un mode de chauffage ou un mode de refroidissement en fonction d'une configuration du dispositif d'inversion, le dispositif de climatisation comporte des moyens d'activation de chaque vanne de sélection, configurés pour faire passer le fluide caloporteur vers chaque second échangeur en mode de refroidissement et pour faire passer le fluide caloporteur vers chaque troisième échangeur en mode de chauffage.

L'invention sera mieux comprise à la lecture de la description qui va suivre, donnée uniquement à titre d'exemple et faite en se référant aux figures annexées, parmi lesquelles :
- la figure 1 représente schématiquement de profil une voiture de véhicule de transport selon un exemple de mode de réalisation de l'invention ;
- la figure 2 représente schématiquement en coupe transversale la voiture de la figure 1, dans une première configuration de refroidissement ;
- la figure 3 est une vue similaire à la figure 2, représentant la voiture dans une seconde configuration de chauffage ;
- la figure 4 représente schématiquement un dispositif de climatisation équipant la voiture des figures 1 à 3.

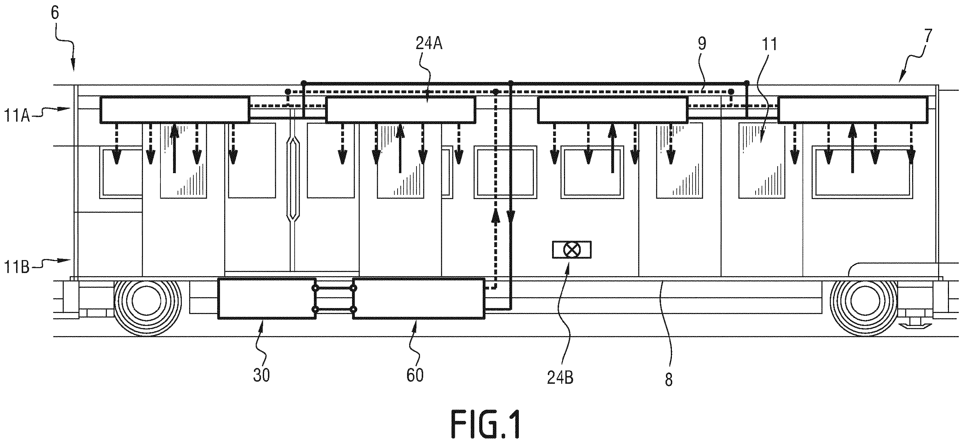

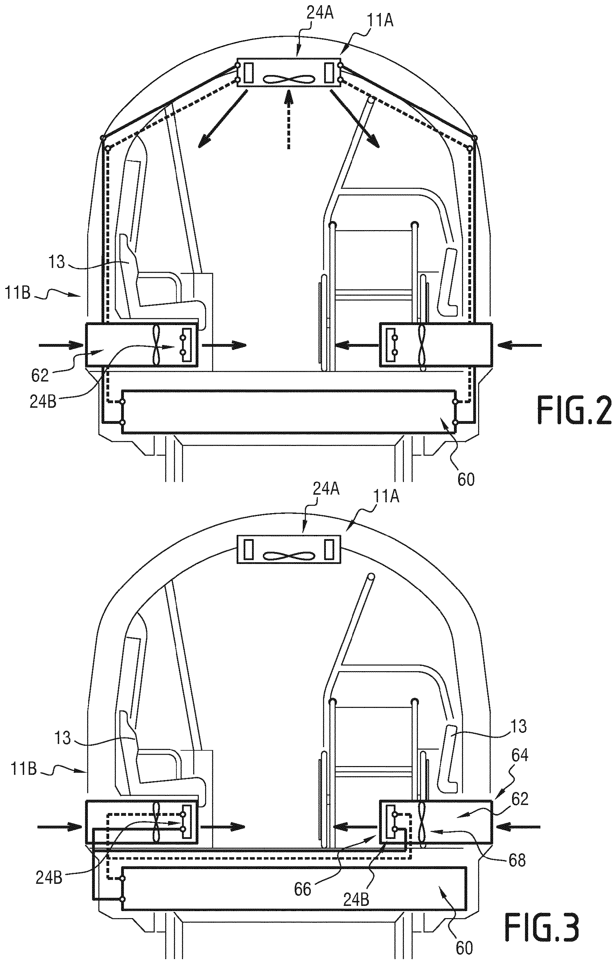

On a représenté, sur les figures 1 à 3, une voiture 6 de véhicule de transport et notamment de véhicule ferroviaire. Par exemple, le véhicule ferroviaire est un métro.

Plus généralement, la voiture 6 est une voiture de véhicule de transport public ou de chantier ou de fret.

La voiture 6 comporte une caisse structurelle 7, comprenant notamment un plancher 8 et un plafond 9, ainsi que des parois latérales. La caisse structurelle 7 délimite au moins un compartiment 11 de transport de passagers. Ce compartiment de transport comporte au moins un siège 13 pour un passager.

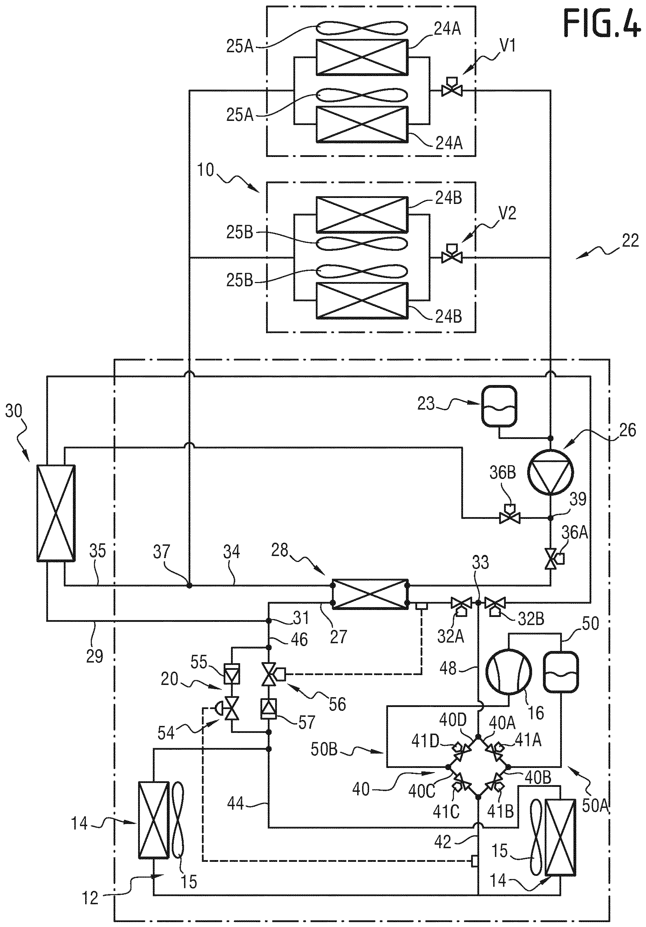

La voiture 6 comporte par ailleurs un dispositif de climatisation 10, représenté plus en détail sur la figure 4, destiné à climatiser un compartiment 11 de la voiture 6. On notera que plusieurs dispositifs 10 de climatisation identiques peuvent être agencés en parallèle, dans le compartiment 11 et/ou dans des compartiments adjacents.

Le dispositif de climatisation 10 comporte un premier circuit 12 de pompe à chaleur, dans lequel circule un fluide frigorigène.

Le premier circuit 12 comporte au moins un premier échangeur 14 de chaleur avec de l'air, agencé à l'extérieur du compartiment. Ainsi, chaque premier échangeur 14 permet d'échanger de la chaleur entre le fluide frigorigène et de l'air extérieur. Avantageusement, chaque premier échangeur 14 est équipé d'un premier dispositif de ventilation 15, propre à générer un flux d'air passant par ce premier échangeur de chaleur 14. Ce dispositif de ventilation favorise l'échange de chaleur entre l'air et l'échangeur de chaleur 14.

Le premier circuit 12 comporte également, de manière classique, un compresseur 16 et un dispositif détendeur 20, de part et d'autre du premier échangeur 14. Plus particulièrement, chaque premier échangeur 14 est relié d'une part au compresseur 16 et d'autre part au dispositif détendeur 20, par l'intermédiaire d'embranchements communs.

Avantageusement, le premier circuit 12 comporte également plusieurs compresseurs 16.

Le dispositif de climatisation 10 comporte par ailleurs au moins un second circuit 22, dans lequel circule un fluide caloporteur.

Le second circuit 22 comprend au moins un second échangeur 24A de chaleur avec de l'air, agencé dans le compartiment 11, de préférence dans une zone supérieure 11A de ce compartiment 11. Plus particulièrement, chaque second échangeur 24A est agencé sur le plafond 9.

Chaque second échangeur 24A permet d'échanger de la chaleur entre le fluide caloporteur et l'air du compartiment 11. Avantageusement, chaque second échangeur de chaleur 24A est équipé d'un second dispositif de ventilation 25A, propre à générer un flux d'air passant par ce second échangeur de chaleur 24A, pour favoriser l'échange de chaleur entre l'air et ce second échangeur de chaleur 24A.

Le second circuit 22 comprend par ailleurs avantageusement au moins un troisième échangeur 24B de chaleur avec de l'air, agencé dans le compartiment 11, dans une zone inférieure 11B de ce compartiment 11. Plus particulièrement, chaque troisième échangeur 24B est agencé sous l'un respectif des sièges 13.

Chaque troisième échangeur 24B permet d'échanger de la chaleur entre le fluide caloporteur et l'air du compartiment 11. Avantageusement, chaque troisième échangeur de chaleur 24B est équipé d'un second dispositif de ventilation 25B, propre à générer un flux d'air passant par ce troisième échangeur de chaleur 24B, pour favoriser l'échange de chaleur entre l'air et ce troisième échangeur de chaleur 24B.

Avantageusement, la voiture 10 comporte au moins un logement 62 pour au moins l'un parmi les au moins un troisième échangeur 24B, comprenant une ouverture d'arrivée d'air 64 débouchant à l'extérieur de la voiture 10, et une ouverture de sortie d'air 66 débouchant dans le compartiment 11, sous un siège 13 respectif. Des moyens 68 de mise en circulation d'air sont agencés dans le logement 62, pour faire circuler l'air depuis l'ouverture d'arrivée d'air 64 vers l'ouverture de sortie d'air 66, en passant par le troisième échangeur 24B.

Le second circuit 22 comporte au moins une vanne de sélection V1, V2, pour sélectionner le passage du fluide caloporteur vers chaque second échangeur 24A ou vers chaque troisième échangeur 24B. En d'autres termes, cette vanne de sélection V1, V2 permet la connexion sélective de l'échangeur de chaleur commun 28, avec chaque second échangeur 24A ou avec chaque troisième échangeur 24B.

Le second circuit 22 comporte par ailleurs une pompe 26 de circulation de fluide dans le second circuit 22.

Avantageusement, le second circuit 22 comporte un réservoir 23 de fluide caloporteur, permettant d'absorber les variations de volume du fluide caloporteur, notamment dues aux variations de température.

Le dispositif de climatisation 10 comporte par ailleurs au moins un échangeur de chaleur 28 commun aux premier 12 et second 22 circuits, par lequel passent le premier circuit 12 et le second circuit 22. Cet échangeur de chaleur commun 28 permet d'échanger de la chaleur entre le fluide frigorigène et le fluide caloporteur.

Le dispositif de climatisation 10 comporte également au moins un réservoir de stockage thermique 30, connecté au premier circuit 12 en parallèle de l'échangeur de chaleur commun 28, et connecté au second circuit 22 en parallèle de l'échangeur de chaleur commun 28.

Le réservoir de stockage thermique 30 comporte par exemple une enceinte remplie d'un fluide ou d'un matériau à changement de phase, notamment un liquide ou liquide qui se solidifie en se refroidissant, de stockage thermique, un premier élément creux d'échange thermique, logé dans l'enceinte et communiquant avec le second circuit 22, et avantageusement un second élément creux d'échange thermique, logé dans l'enceinte, communiquant avec le premier circuit 12. Le réservoir de stockage 30 permet un échange de chaleur entre le liquide de stockage et le fluide caloporteur d'une part et avantageusement entre le liquide de stockage et le fluide frigorigène d'autre part.

Le premier circuit 12 comporte une première branche 27 d'échangeur commun, passant par l'échangeur commun 28, et avantageusement une première branche 29 de réservoir, passant par le réservoir thermique 30. La première branche d'échangeur commun 27 et la première branche de réservoir 29 sont parallèles, si bien qu'elles s'étendent toutes deux entre un premier embranchement 31 et un second embranchement 33.

Le premier circuit 12 comporte au moins une première vanne 32A, 32B, notamment au moins une première électrovanne, pour autoriser ou interdire la circulation de fluide frigorigène au travers de l'échangeur de chaleur commun 28 et du réservoir de stockage 30. Ainsi, cette au moins une première vanne 32A, 32B permet la connexion sélective du premier échangeur 14 avec l'échangeur de chaleur commun 28, avec le réservoir de stockage 30, avec les deux parmi l'échangeur de chaleur commun 28 et le réservoir de stockage 30 ou avec aucun parmi l'échangeur de chaleur commun 28 et le réservoir de stockage 30.

Dans l'exemple représenté, le premier circuit 12 comporte deux premières vannes 32A, 32B, l'une agencée sur la première branche d'échangeur commun 27, et l'autre agencée sur la première branche de réservoir 29.

En variante, l'un parmi les premier 31 et second 33 embranchements pourrait être formé par une vanne à trois voies, dont une première voie est connectée à la première branche 27 d'échangeur commun, une seconde voie est connectée à la première branche de réservoir 29, et une troisième voie est connectée à une branche reliée au compresseur 16 ou au dispositif détendeur 20.

De même, le second circuit 22 comporte une seconde branche 34 d'échangeur commun, passant par l'échangeur commun 28, et une seconde branche 35 de réservoir, passant par le réservoir thermique 30. La seconde branche d'échangeur commun 34 et la seconde branche de réservoir 35 sont parallèles, si bien qu'elles s'étendent toutes deux entre un troisième embranchement 37 et un quatrième embranchement 39.

Le second circuit 22 comporte au moins une seconde vanne 36A, 36B, notamment au moins une seconde électrovanne, pour autoriser ou interdire la circulation de fluide caloporteur au travers de l'échangeur de chaleur commun 28 et du réservoir de stockage 30. Ainsi, cette au moins une seconde vanne 36A, 36B permet la connexion sélective du second 24A ou troisième 24B échangeur avec l'échangeur de chaleur commun 28, avec le réservoir de stockage 30, avec les deux parmi l'échangeur de chaleur commun 28 et le réservoir de stockage 30 ou avec aucun parmi l'échangeur de chaleur commun 28 et le réservoir de stockage 30.

Dans l'exemple représenté, le second circuit 12 comporte deux secondes vannes 36A, 36B, l'une agencée sur la seconde branche d'échangeur commun 34, et l'autre agencée sur la seconde branche de réservoir 35.

En variante, l'un parmi les troisième 37 et quatrième 39 embranchements pourrait être formé par une vanne à trois voies, dont une première voie est connectée à la seconde branche 34 d'échangeur commun, une seconde voie est connectée à la seconde branche de réservoir 35, et une troisième voie est connectée à une branche reliée au second 24A ou troisième 24B échangeur de chaleur ou à la pompe 26.

Le premier circuit 12 est réversible. Ainsi, il comporte un dispositif d'inversion 40, propre à connecter la sortie du compresseur 16 soit aux premiers échangeurs 14 soit à l'échangeur de chaleur commun 28.

Plus particulièrement, le premier circuit 12 comporte :
- une première branche 42, s'étendant entre le dispositif d'inversion 40 et le premier échangeur de chaleur 14,
- une deuxième branche 44, s'étendant entre le premier échangeur de chaleur 14 et le dispositif détendeur 20,
- une troisième branche 46, s'étendant entre le dispositif détendeur 20 et le premier embranchement 31,
- une quatrième branche 48, s'étendant entre le second embranchement 33 et le dispositif d'inversion 40, et
- une branche de compresseur 50 sur laquelle est agencée le compresseur 16, s'étendant entre une partie d'entrée 50A et une partie de sortie 50A.

Le dispositif d'inversion 40 est propre à connecter alternativement la partie d'entrée 50A à la première branche 42 et la partie de sortie 50B à la quatrième branche 48, où la partie d'entrée 50A à la quatrième branche 48 et la partie de sortie 50B à la première branche 42.

Le dispositif d'inversion 40 comporte par exemple :
- une première partie 40A, comprenant une première vanne d'inversion 41A (par exemple une électrovanne), s'étendant entre la quatrième branche 48 et la partie d'entrée 50A,
- une seconde partie 40B, comprenant une seconde vanne d'inversion 41B (par exemple une électrovanne), s'étendant entre la partie d'entrée 50A et la première branche 42,
- une troisième partie 40C, comprenant une troisième vanne d'inversion 41C (par exemple une électrovanne), s'étendant entre la première branche 42 et la partie de sortie 50B, et
- une quatrième partie 40D, comprenant une quatrième vanne d'inversion 41D (par exemple une électrovanne), s'étendant entre la partie de sortie 50B et la quatrième branche 48.

Par ailleurs, le dispositif détendeur 20 comporte un premier 54 et un second 56 détendeur, chacun porté par une branche de détendeur respective, telle que le premier détendeur 54 présente une entrée connectée à la deuxième branche 44 et une sortie connectée à la troisième branche 46, et le second détendeur 56 présente une entrée connectée à la troisième branche 46 et une sortie connectée à la deuxième branche 44. Chaque branche de détendeur comporte un clapet anti-retour 55, 57 agencé en série avec le premier 54 ou second 56 détendeurs correspondants, et orienté dans le même sens que le premier 54 ou second 56 détendeurs correspondants.

Ainsi, en fonction du sens de circulation du fluide frigorigène imposé par le compresseur 16, ce fluide frigorigène passe par l'une ou l'autre des première et seconde branches de détendeur.

On notera que le premier circuit 12, ainsi que l'échangeur commun 28, la pompe 26 et le réservoir 23 sont logés dans une unité de climatisation 60, agencée sous le plancher 9 comme cela est représenté sur les figures 1 à 3.

De préférence, le réservoir de stockage thermique 30 est également agencé sous le plancher 9.

Le fonctionnement du dispositif de climatisation 10 va maintenant être décrit ci-dessous.

Ce dispositif de climatisation 10 peut prendre plusieurs configurations de fonctionnement, et plus particulièrement, un mode général de chauffage et un mode général de refroidissement, comportant chacun plusieurs configurations.

Ainsi, en fonction du sens de circulation du fluide frigorigène, le dispositif de climatisation 10 est dans le mode de refroidissement ou dans le mode de chauffage.

Dans le mode de refroidissement, le dispositif d'inversion 40 connecte la partie de sortie 50B à la première branche 42, et la partie d'entrée à la quatrième branche 48. En d'autres termes, les première 41A et troisième 41C vannes d'inversion sont ouvertes, et les secondes 41B et quatrième 41D vannes d'inversion sont fermées.

Le dispositif de climatisation 10 en mode de refroidissement peut notamment prendre au moins trois configurations de fonctionnement, à savoir une première configuration nominale de refroidissement, une seconde configuration de stockage de froid et une troisième configuration d'utilisation du froid stocké.

Dans la première configuration nominale de refroidissement, le fluide frigorigène, sortant du compresseur 16, circule jusqu'aux premiers échangeurs de chaleur 14, où il cède de la chaleur à l'air extérieur.

Le fluide frigorigène ainsi refroidi circule ensuite jusqu'au dispositif détendeur 20, où il est encore refroidi lorsque sa pression diminue dans ce dispositif détendeur 20.

Le fluide frigorigène circule ensuite jusqu'au premier embranchement 31.

Dans cette première configuration nominale de refroidissement, la première vanne 32A de la première branche d'échangeur commun 27 est ouverte, et la première vanne 32B de la première branche de réservoir 29 est fermée. Le fluide frigorigène circule alors à travers l'échangeur de chaleur commun 28, où il prélève de la chaleur au fluide caloporteur.

Le fluide frigorigène circule enfin jusqu'au compresseur 16, où un nouveau cycle peut commencer.

Dans le second circuit 22, la seconde vanne 36A de la seconde branche d'échangeur commun 34 est ouverte, et la seconde vanne 36B de la seconde branche de réservoir 35 est fermée. Le fluide caloporteur circule donc, depuis la pompe 26, au travers de l'échangeur de chaleur commun 28, où il cède de la chaleur au fluide frigorigène.

Par ailleurs, en mode de refroidissement, les vannes de sélection V1, V2 font circuler le fluide caloporteur par les seconds échangeurs de chaleur 24A.

Avantageusement, le dispositif de climatisation 10 comporte des moyens d'activation des vannes de sélection V1, V2, configurés pour faire passer le fluide caloporteur vers chaque second échangeur 24A en mode de refroidissement et pour faire passer le fluide caloporteur vers chaque troisième échangeur 24B en mode de chauffage.

Le fluide caloporteur circule alors jusqu'aux seconds échangeurs de chaleur 24A, où il prélève de la chaleur à l'air du compartiment 11, dont la température est ainsi réduite.

Les seconds échangeurs de chaleur 24A étant agencés en zone supérieure 11A du compartiment 11, le froid se diffuse, de manière optimale, vers le bas dans le compartiment 11.

Cette première configuration correspond sensiblement à une configuration de refroidissement classique, où le dispositif de climatisation 10 prélève de la chaleur dans le compartiment 11 pour céder cette chaleur à l'extérieur.

Dans la seconde configuration de stockage de froid dans le réservoir de stockage 30, la première vanne 32A de la première branche d'échangeur commun 27 est fermée, et la première vanne 32B de la première branche de réservoir 29 est ouverte, si bien que le fluide frigorigène circule à travers le réservoir de stockage 30, où il prélève de la chaleur au liquide de stockage. Ainsi, le fluide frigorigène prélève de la chaleur au liquide de stockage, pour la céder à l'air extérieur dans le premier échangeur de chaleur 14, de la même manière que précédemment.

Dans cette seconde configuration de stockage de froid, la seconde vanne 36A de la seconde branche 34 d'échangeur commun est ouverte, et la seconde vanne 36B de la seconde branche de réservoir 35 est fermée.

Ainsi, pendant que le premier circuit 12 stocke du froid dans le réservoir de stockage 30, le second circuit 22 continue de prélever de la chaleur à l'air du compartiment 11 par le second échangeur 24A, pour la céder au fluide frigorigène résiduel dans l'échangeur commun 28.

En variante, dans une autre configuration, les secondes vannes 36A, 36B sont toutes deux fermées pendant que le premier circuit 12 stocke du froid dans le réservoir de stockage 30.

Le froid stocké peut ensuite être utilisé dans la troisième configuration d'utilisation de froid stocké.

Dans cette troisième configuration d'utilisation de froid stocké, chaque première vanne 32A, 32B est fermée pour déconnecter l'échangeur de chaleur commun 28 et le réservoir de stockage 30 du premier échangeur de chaleur 14. Le premier circuit 12 est ainsi désactivé, et ne cède donc pas de chaleur à l'extérieur. Avantageusement, le dispositif de ventilation 15 est également désactivé.

En revanche, dans le second circuit 22, la seconde vanne 36A de la seconde branche d'échangeur commun 34 est fermée, et la seconde vanne 36B de la seconde branche de réservoir 35 est ouverte. Le fluide caloporteur circule donc, depuis la pompe 26, au travers du réservoir de stockage 30, où il cède de la chaleur au liquide de stockage. Ainsi, le fluide caloporteur prélève de la chaleur à l'air du compartiment 11 dans le second échangeur de chaleur 24A, puis cède de la chaleur au liquide de stockage logé dans le réservoir de stockage 30.

On notera que, lorsque le dispositif de climatisation équipe un compartiment de véhicule ferroviaire, lorsque le véhicule ferroviaire circule dans un espace confiné, notamment un tunnel, le dispositif de climatisation 10 prend la troisième configuration d'utilisation de froid stocké, dans laquelle le premier circuit 12 est désactivé, afin de ne pas rejeter de chaleur dans l'espace confiné.

En revanche, lorsque le véhicule ferroviaire circule en dehors d'un espace confiné, le dispositif de climatisation 10 prend la seconde configuration de stockage de froid ou la première configuration nominale de refroidissement.

Par exemple, le dispositif de climatisation 10 prend alternativement la première et la seconde configuration, tant que le véhicule ferroviaire circule en dehors d'un espace confiné.

Le passage d'une configuration à une autre peut être effectué automatiquement, par exemple en détectant les espaces confinés à l'aide de moyens classiques (par exemple au moyen d'un système de guidage par satellite ou équivalent). En variante, le passage d'une configuration à une autre peut être effectué manuellement par un opérateur, par exemple le conducteur du véhicule ferroviaire.

On notera que les configurations décrites ci-dessus ne sont pas limitatives, et qu'on peut prévoir d'autres configurations de fonctionnement.

Par exemple, les premières vannes 32A, 32B peuvent, dans une autre configuration de stockage de froid, êtres toutes deux ouvertes, pour prélever de la chaleur dans le réservoir 30 tout en prélevant de la chaleur dans l'échangeur commun 28. En revanche, la seconde vanne 36A de la seconde branche d'échangeur commun 34 est ouverte, et la seconde vanne 36B de la seconde branche de réservoir 35 est fermée. Le dispositif de climatisation 10 peut ainsi refroidir l'air du compartiment 11, tout en stockant du froid dans le réservoir de stockage 30.

Dans le mode de chauffage, le dispositif d'inversion 40 connecte la partie de sortie 50B à la quatrième branche 48 et la partie d'entrée 50A à la première branche. En d'autres termes, les première 41A et troisième 41C vannes d'inversion sont fermées, et les secondes 41B et quatrième 41D vannes d'inversion sont ouvertes.

Le dispositif de climatisation 10 peut alors prendre au moins trois configurations de fonctionnement supplémentaires, à savoir une quatrième configuration nominale de chauffage, une cinquième configuration de stockage de chaleur et une troisième configuration d'utilisation de la chaleur stockée.

Dans la quatrième configuration nominale de chauffage, le fluide frigorigène, sortant du compresseur 16, circule jusqu'au second embranchement 33.

Dans cette quatrième configuration nominale de chauffage, la première vanne 32A de la première branche d'échangeur commun 27 est ouverte, et la première vanne 32B de la première branche de réservoir 29 est fermée. Le fluide frigorigène circule alors à travers l'échangeur de chaleur commun 28, où il cède de la chaleur au fluide caloporteur.

Le fluide frigorigène ainsi refroidi circule ensuite jusqu'au dispositif détendeur 20, où il est encore refroidi lorsque sa pression diminue dans ce dispositif détendeur 20.

Le fluide frigorigène circule ensuite jusqu'au premier échangeur de chaleur 14, où il prélève de la chaleur à l'air extérieur.

Le fluide frigorigène circule enfin jusqu'au compresseur 16, où un nouveau cycle peut commencer.

Dans le second circuit 22, les vannes de sélection V1, V2 sont configurées pour faire passer le fluide caloporteur par les troisièmes échangeurs 24B.

La seconde vanne 36A de la seconde branche d'échangeur commun 34 est ouverte, et la seconde vanne 36B de la seconde branche de réservoir 35 est fermée. Le fluide caloporteur circule donc, depuis la pompe 26, au travers de l'échangeur de chaleur commun 28, où il prélève de la chaleur au fluide frigorigène.

Le fluide caloporteur circule ensuite jusqu'aux troisièmes échangeurs de chaleur 24B, où il cède de la chaleur à l'air du compartiment 11, dont la température est ainsi augmentée.

Les troisièmes échangeurs 24B étant agencés en zone inférieure 11B du compartiment 11, la chaleur remonte dans le compartiment 11 depuis cette zone inférieure 11B.

Cette quatrième configuration correspond sensiblement à une configuration de chauffage classique, où le dispositif de climatisation 10 prélève de la chaleur à l'extérieur pour céder cette chaleur dans le compartiment 11.

Dans la cinquième configuration de stockage de chaleur dans le réservoir de stockage 30, la première vanne 32A de la première branche d'échangeur commun 27 est fermée, et la première vanne 32B de la première branche de réservoir 29 est ouverte, si bien que le fluide frigorigène circule à travers le réservoir de stockage 30, où il cède de la chaleur au liquide de stockage. Ainsi, le fluide frigorigène prélève de la chaleur à l'air extérieur, pour la céder au liquide de stockage, de la même manière que précédemment.

Dans cette cinquième configuration de stockage de chaleur, la seconde vanne 36A de la seconde branche 34 d'échangeur commun est ouverte, et la seconde vanne 36B de la seconde branche de réservoir 35 est fermée.

Ainsi, pendant que le premier circuit 12 stocke de la chaleur dans le réservoir de stockage 30, le second circuit 22 continue de prélever de la chaleur résiduelle du fluide frigorigène résiduel dans l'échangeur commun 28, pour la céder à l'air du compartiment 11 par le troisième échangeur 24B.

En variante, dans une autre configuration, les secondes vannes 36A, 36B sont toutes deux fermées pendant que le premier circuit 12 stocke de la chaleur dans le réservoir de stockage 30.

Dans le cas d'un véhicule ferroviaire, la chaleur dissipée lors du freinage ou par les caténaires peut ainsi être récupérée et stockée dans le réservoir de stockage 30, en vue d'une utilisation ultérieure.

En outre, cette cinquième configuration peut être avantageusement utilisée pour refroidir l'air dans un espace confiné, tel qu'un tunnel, dans lequel circule le véhicule ferroviaire. En effet, le premier circuit prélève de la chaleur dans l'air de cet espace confiné, pour la céder au réservoir de stockage.

La chaleur stockée peut ensuite être utilisée dans la sixième configuration d'utilisation de chaleur stockée.

Dans cette sixième configuration d'utilisation de chaleur stockée, chaque première vanne 32A, 32B est fermée pour déconnecter l'échangeur de chaleur commun 28 et le réservoir de stockage 30 du premier échangeur de chaleur 14. Le premier circuit 12 est ainsi désactivé, et ne prélève donc pas de chaleur à l'extérieur. Avantageusement, le dispositif de ventilation 15 est également désactivé.

En revanche, dans le second circuit 22, la seconde vanne 36A de la seconde branche d'échangeur commun 34 est fermée, et la seconde vanne 36B de la seconde branche de réservoir 35 est ouverte. Le fluide caloporteur circule donc, depuis la pompe 26, au travers du réservoir de stockage 30, où il prélève de la chaleur au liquide de stockage, pour la céder ensuite à l'air du compartiment 11 dans chaque troisième échangeur de chaleur 24B.

On notera que l'invention n'est pas limitée aux modes de réalisation précédemment décrits, mais pourrait présenter diverses variantes sans sortir du cadre des revendications.

Par exemple, le dispositif de climatisation 10 pourrait comporter plusieurs seconds circuits 22, passant tous par l'échangeur de chaleur commun 28 et le réservoir de stockage 30, et comportant chacun des seconds et troisièmes échangeur de chaleur respectifs logés dans un compartiment, notamment dans un même compartiment ou répartis dans différents compartiments.

Par ailleurs, bien que le dispositif de climatisation 10 selon l'invention soit particulièrement adapté à un véhicule ferroviaire, notamment de type métro, il peut être employé dans tout type de compartiment envisageable.

## Revendications

1. Voiture (6) de véhicule de transport, notamment de véhicule ferroviaire, comportant un compartiment (11) et un dispositif (10) de climatisation du compartiment (11), le dispositif de climatisation (10) comprenant un premier circuit de pompe à chaleur (12), dans lequel circule un fluide frigorigène, le premier circuit (12) comprenant au moins un premier échangeur (14) de chaleur avec de l'air extérieur, un compresseur (16) et un dispositif détendeur (20), le dispositif de climatisation (10) comportant :
- un second circuit (22), dans lequel circule un fluide caloporteur, comprenant au moins un second échangeur (24A) de chaleur avec de l'air du compartiment (11), agencé dans le compartiment (11), et
- un échangeur de chaleur commun (28), par lequel passent le premier circuit (12) et le second circuit (22), propre à échanger de la chaleur entre le fluide frigorigène et le fluide caloporteur,
**caractérisé en ce que** le second circuit (22) comprend au moins un troisième échangeur (24B) de chaleur avec de l'air du compartiment (11), agencé dans une zone inférieure (11B) du compartiment (11), notamment sous un siège (13) du compartiment (11), et **en ce que** la voiture comporte :
- un logement (62) pour au moins l'un parmi les au moins un troisième échangeur (24B), comprenant une ouverture d'arrivée d'air (64) débouchant à l'extérieur de la voiture (6), et une ouverture de sortie d'air (66) débouchant dans le compartiment (11), et
- des moyens (68) de mise en circulation de l'air dans le logement (62) depuis l'ouverture d'arrivée d'air (64) vers l'ouverture de sortie d'air (66), en passant par le troisième échangeur (24B).

2. Voiture (6) selon la revendication 1, dans laquelle le premier circuit (12) et l'échangeur de chaleur commun (28) sont agencés sous un plancher (8) du compartiment (11).

3. Voiture (6) selon l'une quelconque des revendications précédentes, dans laquelle chaque second échangeur de chaleur (24A) est agencé dans une zone supérieure (11A) du compartiment (11), notamment sur un plafond (9) du compartiment (11).

4. Voiture (6) selon l'une quelconque des revendications précédentes, dans laquelle le dispositif de climatisation (10) comporte un réservoir de stockage thermique (30), connectable au premier circuit (12) en parallèle de l'échangeur de chaleur commun (28), et/ou connectable au second circuit (22) en parallèle de l'échangeur de chaleur commun (28).

5. Voiture (6) selon la revendication 4, dans laquelle le réservoir de stockage thermique (30) est agencé sous un plancher (8) du compartiment (11).

6. Voiture (6) selon l'une quelconque des revendications précédentes, dans laquelle le premier circuit (12) comporte :
- une première branche (42), connectée à chaque premier échangeur de chaleur (14),
- une deuxième branche (44), s'étendant entre chaque premier échangeur de chaleur (14) et le dispositif détendeur (20),
- une troisième branche (46), s'étendant entre le dispositif détendeur (20) et l'échangeur de chaleur commun (28),
- une quatrième branche (48), connectée à l'échangeur de chaleur commun (28),
- une branche de compresseur (50), sur laquelle est agencée le compresseur (16), et s'étendant entre une partie d'entrée (50A) et une partie de sortie (50B), et
- un dispositif d'inversion (40), propre à connecter alternativement ladite partie d'entrée (50A) à la première branche (42) et ladite partie de sortie (50B) à la quatrième branche (48), ou ladite partie d'entrée (50A) à la quatrième branche (48) et ladite partie de sortie (50B) à la première branche (42).

7. Voiture (6) selon la revendication 6, dans laquelle le second circuit (22) comporte au moins une vanne (V1, V2) de sélection du passage du fluide caloporteur vers chaque second échangeur (24A) ou vers chaque troisième échangeur (24B), permettant la connexion sélective de l'échangeur de chaleur commun (28), avec chaque second échangeur (24A) ou avec chaque troisième échangeur (24B).

8. Voiture (6) selon la revendication 7, dans laquelle, le premier circuit (12) pouvant prendre un mode de chauffage ou un mode de refroidissement en fonction d'une configuration du dispositif d'inversion (40), le dispositif de climatisation (10) comporte des moyens d'activation de chaque vanne de sélection (V1, V2), configurés pour faire passer le fluide caloporteur vers chaque second échangeur (24A) en mode de refroidissement et pour faire passer le fluide caloporteur vers chaque troisième échangeur (24B) en mode de chauffage.

## Patentansprüche

1. Wagen (6) eines Transportfahrzeugs, insbesondere eines Schienenfahrzeugs, aufweisend ein Abteil (11) und eine Klimaanlage (10) für das Abteil (11), wobei die Klimaanlage (10) einen ersten Wärmepumpenkreislauf (12) umfasst, in dem ein Kältemittel zirkuliert, wobei der erste Kreislauf (12) mindestens einen ersten Wärmetauscher (14) zum Austausch mit Außenluft, einen Kompressor (16) und eine Expansionsvorrichtung (20) umfasst, wobei die Klimaanlage (10) aufweist:
- einen zweiten Kreislauf (22), in dem ein Wärmeträgerfluid strömt, umfassend mindestens einen zweiten Wärmetauscher (24A) zum Austausch mit Luft aus dem Abteil (11), der in dem Abteil (11) angeordnet ist, und
- einen gemeinsamen Wärmetauscher (28), durch den der erste Kreislauf (12) und der zweite Kreislauf (22) verlaufen, geeignet zum Austausch von Wärme zwischen dem Kältemittel und dem Wärmeträgerfluid,
**dadurch gekennzeichnet, dass** der zweite Kreislauf (22) mindestens einen dritten Wärmetauscher (24B) zum Austausch mit Luft aus dem Abteil (11) umfasst, der in einer unteren Zone (11B) des Abteils (11), insbesondere unter einem Sitz (13) des Abteils (11), angeordnet ist, und dass der Wagen umfasst:
- ein Gehäuse (62) für mindestens einen der mindestens einen dritten Tauscher (24B), umfassend eine Lufteinlassöffnung (64), die sich zur Außenseite des Fahrzeugs (6) öffnet, und eine Luftauslassöffnung (66), die sich zum Fach (11) öffnet, und
- Mittel (68) zum Zirkulieren der Luft in dem Gehäuse (62) von der Lufteinlassöffnung (64) durch den dritten Wärmetauscher (24B) zu der Luftauslassöffnung (66).

2. Wagen (6) nach Anspruch 1, wobei der erste Kreislauf (12) und der gemeinsame Wärmetauscher (28) unter einem Boden (8) des Abteils (11) angeordnet sind.

3. Wagen (6) nach einem der vorangegangenen Ansprüche, bei dem jeder zweite Wärmetauscher (24A) in einem oberen Bereich (11A) des Abteils (11) angeordnet ist, insbesondere an einer Decke (9) des Abteils (11).

4. Wagen (6) nach einem der vorangegangenen Ansprüche, bei dem die Klimaanlage (10) einen Wärmespeicher (30) aufweist, der parallel zum gemeinsamen Wärmetauscher (28) mit dem ersten Kreislauf (12) verbindbar ist und/oder parallel zum gemeinsamen Wärmetauscher (28) mit dem zweiten Kreislauf (22) verbindbar ist.

5. Wagen (6) nach Anspruch 4, bei dem der Wärmespeicher (30) unter einem Boden (8) des Abteils (11) angeordnet ist.

6. Wagen (6) nach einem der vorangegangenen Ansprüche, in dem der erste Kreislauf (12) Folgendes aufweist:
- einen ersten Abzweig (42), der mit jedem ersten Wärmetauscher (14) verbunden ist,
- einen zweiten Abzweig (44), der sich zwischen jedem ersten Wärmetauscher (14) und der Expansionsvorrichtung (20) erstreckt,
- einen dritten Abzweig (46), der sich zwischen der Expansionsvorrichtung (20) und dem gemeinsamen Wärmetauscher (28) erstreckt,
- einen vierten Abzweig (48), der mit dem gemeinsamen Wärmetauscher (28) verbunden ist,
- einen Verdichterabzweig (50), an dem der Verdichter (16) angeordnet ist, und sich zwischen einem Eingangsteil (50A) und einem Ausgangsteil (50B) erstreckt, und
- eine Umkehrvorrichtung (40), die geeignet ist zum abwechselnden Verbinden des Eingangsteils (50A) mit dem ersten Abzweig (42) und des Ausgangsteils (50B) mit dem vierten Abzweig (48) oder des Eingangsteils (50A) mit dem vierten Abzweig (42) und des Ausgangsteils (50B) mit dem ersten Abzweig (42).

7. Wagen (6) nach Anspruch 6, wobei der zweite Kreislauf (22) mindestens ein Ventil (V1, V2) zum Wählen des Durchlasses des Wärmeträgerfluids zu jedem zweiten Wärmetauscher (24A) oder zu jedem dritten Wärmetauscher (24B) aufweist, was die selektive Verbindung des gemeinsamen Wärmetauschers (28) mit jedem zweiten Wärmetauscher (24A) oder jedem dritten Wärmetauscher (24B) ermöglicht.

8. Wagen (6) nach Anspruch 7, bei dem, da der erste Kreis (12) einen Heizmodus oder einen Kühlmodus gemäß einer Konfiguration der Umkehrvorrichtung (40) annehmen kann, die Klimaanlage (10) Mittel zum Aktivieren jedes Auswahlventils (V1, V2) aufweist, die eingerichtet sind, um das Wärmeträgerfluid im Kühlmodus zu jedem zweiten Wärmetauscher (24A) zu leiten und das Wärmeträgerfluid im Heizmodus zu jedem dritten Wärmetauscher (24B) zu leiten.

## Claims

1. Transport vehicle carriage (6), in particular railway vehicle, comprising a compartment (11) and a device (10) for air-conditioning the compartment (11), the air-conditioning device (10) comprising a first heat pump circuit (12), in which a refrigerant fluid circulates, the first circuit (12) comprising at least one first heat exchanger (14) with the outside air, a compressor (16) and a pressure reducing device (20), the air-conditioning device (10) comprising:
- a second circuit (22), in which a coolant fluid circulates, comprising at least one second heat exchanger (24A) with the air of the compartment (11), arranged in the compartment (11), and
- a common heat exchanger (28), through which the first circuit (12) and the second circuit (22) pass, able to exchange heat between the refrigerant fluid and the coolant fluid,
**characterised in that** the second circuit (22) comprises at least one third heat exchanger (24B) with the air of the compartment (11), arranged in a lower zone (11B) of the compartment (11), in particular under a seat (13) of the compartment (11), and **in that** the carriage comprises:
- a housing (62) for at least one amongst the at least one third exchanger (24B), comprising an air input opening (64) opening to the exterior of the carriage (6), and an air output opening (66) opening into the compartment (11), and
- means (68) for setting in circulation the air in the housing (62) from the air input opening (64) towards the air output opening (66), by passing through the third exchanger (24B).

2. Carriage (6) according to claim 1, in which the first circuit (12) and the common heat exchanger (28) are arranged under a floor (8) of the compartment (11).

3. Carriage (6) according to any of the preceding claims, in which each second heat exchanger (24A) is arranged in an upper zone (11A) of the compartment (11), in particular on a ceiling (9) of the compartment (11).

4. Carriage (6) according to any of the preceding claims, in which the air-conditioning device (10) comprises a thermal storage reservoir (30), connectable to the first circuit (12) in parallel with the common heat exchanger (28), and/or connectable to the second circuit (22) in parallel with the common heat exchanger (28).

5. Carriage (6) according to claim 4, in which the thermal storage reservoir (30) is arranged under a floor (8) of the compartment (11).

6. Carriage (6) according to any of the preceding claims, in which the first circuit (12) comprises:
- a first branch (42), connected to each first heat exchanger (14),
- a second branch (44), extending between each first heat exchanger (14) and the pressure reducing device (20),
- a third branch (46), extending between the pressure reducing device (20) and the common heat exchanger (28),
- a fourth branch (48), connected to the common heat exchanger (28),
- a compressor branch (50), on which the compressor (16) is arranged, and extending between an input part (50A) and an output part (50B), and
- an inversion device (40), able to connect alternately said input part (50A) to the first branch (42) and said output part (50B) to the fourth branch (48), or said input part (50A) to the fourth branch (48) and said output part (50B) to the first branch (42).

7. Carriage (6) according to claim 6, in which the second circuit (22) comprises at least one valve (V1, V2) for selecting the passage of the coolant fluid towards each second exchanger (24A) or towards each third exchanger (24B), allowing selective connection of the common heat exchanger (28), with each second exchanger (24A) or with each third exchanger (24B).

8. Carriage (6) according to claim 7, in which, the first circuit (12) being able to take a heating mode or a cooling mode as a function of a configuration of the inversion device (40), the air-conditioning device (10) comprises means for activation of each selection valve (V1, V2), configured to allow the coolant fluid to pass towards each second exchanger (24A) in cooling mode and in order to let the coolant fluid pass towards each third exchanger (24B) in heating mode.
